# EUROPÄISCHE PATENTSCHRIFT

(11) **EP 4 506 616 B1**
(45) Veröffentlichungstag und Bekanntmachung des Hinweises auf die Patenterteilung: **18.03.2026**
(21) Anmeldenummer: 23190534.0
(22) Anmeldetag: 09.08.2023
(51) Int. Cl.: F21S 41/143, F21S 41/151, F21S 41/24, F21S 41/25, F21S 41/29, F21S 41/663

(54) **BELEUCHTUNGSVORRICHTUNG FÜR EINEN KRAFTFAHRZEUGSCHEINWERFER SOWIE KRAFTFAHRZEUGSCHEINWERFER**
LIGHTING DEVICE FOR A MOTOR VEHICLE HEADLIGHT AND MOTOR VEHICLE HEADLIGHT
DISPOSITIF D'ÉCLAIRAGE POUR UN PHARE DE VÉHICULE AUTOMOBILE ET PHARE DE VÉHICULE AUTOMOBILE

(43) Veröffentlichungstag der Anmeldung: 12.02.2025
(73) Patentinhaber: ZKW Group GmbH, 3250 Wieselburg (AT)
(72) Erfinder: Danner, Markus, 2252 Ollersdorf (AT); Lumetsberger, Erwin, 3691 Nöchling (AT); Bachler, Jörg, 3652 Leiben (AT)
(74) Vertreter: Patentanwaltskanzlei Matschnig & Forsthuber OG

(56) Entgegenhaltungen:
- EP-A1- 3 578 874
- EP-A1- 3 611 425
- EP-A1- 3 982 041
- WO-A1-2017/015684
- DE-A1- 102013 013 456

## Beschreibung

Die Erfindung betrifft eine Beleuchtungseinrichtung für einen Kraftfahrzeugscheinwerfer, wobei die Beleuchtungseinrichtung eine Beleuchtungseinheit umfasst, wobei die Beleuchtungseinheit umfasst:
- einen Optikkörper mit einer Optikkörper-Lichtaustrittsfläche, wobei der Optikkörper aus einem optisch transparenten Material gebildet ist,
- mehrere Lichtleitkörper, wobei jeder Lichtleitkörper eine Lichteintrittsfläche und eine Lichtaustrittsfläche aufweist,
- für jeden Lichtleitkörper zumindest eine Lichtquelle, wobei die zumindest eine Lichtquelle eines Lichtleitkörpers nur in diesen Lichtleitkörper Licht einspeisen kann, und wobei das Licht der zumindest einen Lichtquelle eines Lichtleitkörpers über die Lichteintrittsfläche des Lichtleitkörpers in diesen eingespeist wird,
wobei die Lichtleitkörper aus einem optisch transparenten Material gebildet sind, sodass sich in einen Lichtleitkörper eingekoppeltes Licht von der Lichteintrittsfläche zu der Lichtaustrittsfläche fortpflanzen kann und wobei zumindest ein Teil des sich in den Lichtleitkörper eingespeisten Lichtes, welches auf seitliche Begrenzungsflächen des Lichtleitkörpers auftrifft, an den Begrenzungsflächen totalreflektiert wird, wobei die Lichtleitkörper seitlich nebeneinander angeordnet sind, und wobei die Lichtleitkörper mit ihren Lichtaustrittsflächen in einer der Optikkörper-Lichtaustrittsfläche des Optikkörpers gegenüberliegenden Optikkörper-Einmündefläche in den Optikkörper einmünden, wobei die Lichtleitkörper derart angeordnet sind, dass Lichtaustrittsflächen benachbarter Lichtleitkörper zueinander einen Abstand größer Null aufweisen, sodass sich jeweils zwischen zwei benachbarten Lichtleitkörpern auf der Optikkörper-Eindmündefläche eine Freifläche ergibt, und wobei die Beleuchtungseinrichtung weiters eine Projektionsvorrichtung umfasst, welche das von den Lichtquellen emittierte Licht in Form einer segmentierten Lichtverteilung abbildet.

Der Begriff "mehrere Lichtleitkörper" umfasst zwei oder mehrere, vorzugsweise mehr als zwei Lichtleitkörper.

Weiters betrifft die Erfindung einen Kraftfahrzeugscheinwerfer mit zumindest einer solchen Beleuchtungsvorrichtung.

Aus dem Stand der Technik sind z.B. Beleuchtungsvorrichtungen bekannt, bei welchen durch Modifikation eines lichtdurchlässigen Körpers, mit welchem eine Abblendlichtverteilung oder eine Vorfeldlichtverteilung erzeugt werden kann, zusätzlich zu dieser Lichtverteilung, mit denselben Lichtquellen, eine Signlightverteilung erzeugt werden kann. Es sind auch andere Ausführungsformen bekannt, bei welchen z.B. eine Projektionsvorrichtung, welche dem lichtdurchlässigen Körper vorgeschaltet ist, entsprechend modifiziert wird (z.B. mittels entsprechender Optiken wie etwa Prismen auf der Projektionsvorrichtung), um zusätzlich zu der ursprünglich erzeugten Abblend- oder Vorfeldlichtverteilung gleichzeitig eine Signlight-Lichtverteilung zu erzeugen.

Für eine Abblendlichtverteilung (z.B. Class C, Class V, Class E) muss immer ein gewisser Anteil Licht über der HD-Linie vorhanden sein. Diesen Anteil an Licht über der HD-Linie bezeichnet man als Signlight, mit welchem beispielsweise Überkopftafeln besser sichtbar gemacht werden können. Beispielsweise können gesetzlich relevante Messpunkte die Punkte sind S50LL, S50, S50RR (auf der V4° Linie), sowie S100LL, S100, S100RR (auf der V2° Linie) sein.

Der große Nachteil der bekannten Lösungen besteht darin, dass diese Signlights mit denselben Lichtquellen wie zur Erzeugung der Abblendlicht- oder Vorfeldlichtverteilung erzeugen, das Signlight somit immer eingeschaltet ist, sobald das Vorfeld/Abblendlichtmodul leuchtet.

Signlight-Prismen auf Projektionsvorrichtungen haben außerdem häufig negative Auswirkungen auf das optische Erscheinungsbild (sowohl das Kalt- als auch Warmdesign werden dadurch geprägt), und teilweise werden diese Projektionsvorrichtung vom Gegenverkehr als blendend wahrgenommen, da das Signlight aus einer vergleichsweise kleinen Fläche auf der Projektionsvorrichtung stammt.

Diese "permanente" Signlight hat sich auch in Hinblick auf Ratings als nachteilig erwiesen. Bei den in modernen Autos verwendeten blendfreien Fernlichtern wird der Bereich des Gegenverkehrs oder eines vorausfahrenden Verkehrsteilnehmers durch Maskierung des Fernlichtes (=Dunkelschalten des gewünschten Bereiches) abgeschaltet. Das Signlight aus dem Vorfeld/Abblendlichtmodul leuchtet aber weiterhin in diesen Bereich.

Speziell im neuen US-ADB Rating führt diese "Blendung" zu einer schlechteren Bewertung.

EP 3578874 A1 und EP 3611425 A1 offenbaren bekannte Beleuchtungseinrichtungen für KFZ-Scheinwerfer.

Es ist eine Aufgabe der Erfindung, eine Beleuchtungsvorrichtung bereitzustellen, mit welcher diese Probleme gelöst werden können.

Diese Aufgabe wird mit einer eingangs beschriebenen Beleuchtungsvorrichtung dadurch gelöst, dass erfindungsgemäß die Beleuchtungseinheit weiters eine Zusatzoptikeinrichtung umfasst, wobei die Zusatzoptikeinrichtung zumindest einen Lichteinkoppelbereich sowie einen oder mehrere Lichtauskoppelbereiche aufweist, wobei jedem Lichteinkoppelbereich zumindest eine Zusatz-Lichtquelle zugeordnet ist, und wobei zumindest ein Teil des von einer Zusatzlichtquelle über einen Lichteinkoppelbereich in die Zusatzoptikeinrichtung einkoppelten Lichtes sich in der Zusatzoptikeinrichtung zu der einen oder den mehreren Lichtauskoppelbereichen fortpflanzt und dort aus der Zusatzoptikvorrichtung austritt, und wobei jeweils zumindest ein, vorzugsweise genau ein, Lichtauskoppelbereich zwischen zwei benachbarten Lichtleitkörpern angeordnet ist, derart, dass aus dem Lichtauskoppelbereich austretendes Licht über die Freifläche zwischen den beiden Lichtleitkörpern in den Optikkörper eintreten und sich in diesem zu der Optikkörper-Lichtaustrittsfläche des Optikkörpers fortpflanzen kann.

Durch die beschriebene Ausgestaltung ergeben sich an der Fläche des Optikkörpers, an welcher die Lichtleitkörper in diesen einmünden, jeweils freie Flächen bzw. Bereiche zwischen benachbarten Lichtleitkörpern, welche sich die vorliegende Erfindung zu Nutze macht.

Bei der Beleuchtungseinheit handelt es sich typischer Weise um eine Beleuchtungseinheit zur Erzeugung einer Lichtverteilung, insbesondere einer segmentierten Lichtverteilung, welche im Wesentlichen oberhalb der horizontalen 0°-0°-Linie liegt und zusätzlich mit einer Abblend- oder Vorfeldlichtverteilung, die von einer anderen Einheit/Modul erzeugt wird, ein Fernlicht bildet. Insbesondere kann mit einer solchen segmentierten Lichtverteilung ADB ("Adaptive Driving Beam") realisiert werden, bei dem Bereich oberhalb der HD-Linie, insbesondere Gegenverkehrsbereiche, ausgeblendet werden können.

Durch die Verwendung einer eigenen bzw. eigener Lichtquellen zur Erzeugung des Signlights muss dieses nicht permanent betrieben werden, weder im Abblend-/Vorfeldlichtbetrieb noch im ADB-Betrieb.

Durch das Zusammenspiel mit dem Optikkörper, welcher Licht für die segmentierte Lichtverteilung bereitstellt, welches sich über der 0°-0°-Linie befindet, kann weiters auf einfache Weise realisiert werden, dass die Signlight-Lichtverteilung in vertikaler Richtung die gewünschten Bereiche im Lichtbild beleuchtet.

Vorzugsweise umfasst der Lichteinkoppelbereich optische Elemente bzw. eine optische Struktur, welche das eingekoppelte Licht parallel richtet. Beispielsweise ist der Lichteinkoppelbereich fresnellinsenartig oder in Form eines Kollimators ausgebildet. Das parallel gerichtete Licht kann sich in der Zusatzoptikeinrichtung in weiterer Folge mittels Totalreflexion fortpflanzen.

Weitere vorteilhafte Ausgestaltungen der Erfindung sind in den abhängigen Ansprüchen beschrieben.

Vorzugsweise ist vorgesehen, dass die Lichtauskoppelbereiche unterhalb einer bzw. der Oberkanten der Lichtaustrittsflächen angeordnet sind, sodass Licht unterhalb der Oberkante(n) in die Freiflächen eingespeist wird.

Die Lichtauskoppelbereiche befinden sich bevorzugt in (geringem) Abstand größer Null zu dem Optikkörper oder können an dem Optikkörper anliegen.

Das aus den Lichtauskoppelbereichen der Lichtleiter stammende Licht wird üblicher Weise in einen Bereich oberhalb einer horizontalen 0°-0°-Linie im Lichtbild abgebildet und erzeugt somit die segmentierte Lichtverteilung. Bei einer vertikal invertierenden Projektionsvorrichtung sind die Lichtaustrittsflächen der Lichtleitkörper dabei so positioniert, dass sie mit ihrer Oberkante in etwa auf Höhe oder knapp oberhalb der optischen Achse der Projektionsvorrichtung liegen. Durch die invertierende Wirkung der Projektionsvorrichtung wird Licht aus den Lichtaustrittsflächen (großteils) oberhalb der 0°-0°-Linie abgebildet, wobei Licht aus dem Bereich der Oberkante im unteren Bereich der Lichtverteilung, nahe zu der 0°-0°-Linie, insbesondere knapp darunter abgebildet wird. (Falls die Oberkante genau auf der optischen Achse der Projektionsvorrichtung liegt, wird aus dem Bereich der Oberkante stammendes Licht auf die 0°-0°-Linie abgebildet.)

Dementsprechend wird Licht aus den unterhalb der Oberkante liegenden Lichtauskoppelbereichen in einem Abstand oberhalb der horizontalen 0°-0°-Linie in der Lichtverteilung abgebildet, sodass ein Abstand zwischen einer Abblendlichtverteilung (die weiter unten noch erörtert wird) und einer mit dem Licht aus den Lichtauskoppelbereichen gebildeten Lichtverteilung, insbesondere einer Signlightverteilung, entsteht.

Es kann vorgesehen sein, dass eine Haupt-Lichtaustrittsrichtung des aus einem Lichtauskoppelbereich austretenden Lichtes in etwa parallel zu der Lichtaustrittsrichtung, in welcher Licht aus einem zu dem Lichtauskoppelbereich benachbarten Lichtleitkörper verläuft, gerichtet ist.

In diesem Zusammenhang ist angemerkt, dass typischer Weise aus den Lichtleitkörpern kein parallel gerichtetes Licht austritt, die Lichtaustrittsrichtung bezeichnet in diesem Fall eine resultierende Richtung aller austretenden Lichtstrahlen.

Weiters kann vorgesehen sein, dass eine Haupt-Lichtaustrittsrichtung des aus einem Lichtauskoppelbereich austretenden Lichtes derart gerichtet ist, dass das Licht von der Projektionsvorrichtung in einen Bereich oberhalb einer 0°-0°-Linie abgebildet wird, insbesondere derart, dass das Licht aller Lichtauskoppelbereiche eine Signlight-Lichtverteilung bildet.

Beispielsweise ist vorgesehen, dass die Zusatzoptikvorrichtung aus einem Körper besteht, der aus einem lichtleitenden Material gebildet ist, wobei vorzugsweise der Körper, welcher die Zusatzoptikvorrichtung bildet, den zumindest einen Lichteinkoppelbereich sowie an diesen anschließend zumindest einen Zuleitungsbereich aufweist, wobei der zumindest eine Zuleitungsbereich in einen Verteilbereich übergeht, über welchen das von der zumindest einen Zusatzlichtquelle kommende Licht auf den einen oder die mehreren Lichtauskoppelbereiche aufgeteilt wird.

Vorzugsweise sind die Lichtauskoppelbereiche ebenfalls Teil des Körpers.

Es können zwei oder mehr Lichtauskoppelbereiche vorgesehen sein, wobei der Verteilbereich und die Lichtauskoppelbereiche vorzugsweise eine kammartige Form aufweisen.

Außerdem kann vorgesehen sein, dass der Zuleitungsbereich in etwa parallel zu den Lichtleitkörpern verläuft und der Verteilbereich quer zu den Lichtleitkörpern und/oder quer zu dem Zuleitungsbereich, insbesondere im Wesentlichen normal zu dem Zuleitungsbereich verläuft, und wobei pro Lichtauskoppelbereich ein Umleitungsabschnitt vorgesehen ist, welcher mit dem Verteilbereich verbunden, insbesondere mit diesem einstückig ausgebildet ist, mit welchem Umleitungsabschnitt Licht dem Lichtauskoppelbereich zugeführt wird.

Beispielsweise weist dabei ein Umleitungsabschnitt einen ersten Umlenkbereich auf, welcher das von dem Verteilbereich in den Umleitungsabschnitt eingespeiste Licht in die Haupt-Lichtaustrittsrichtung umlenkt.

Es kann vorgesehen sein, dass zwischen allen benachbarten Lichtleitkörpern jeweils zumindest ein, insbesondere genau ein Lichtauskoppelbereich angeordnet ist, oder zumindest zwischen zwei benachbarten Lichtleitkörpern, welche zentral angeordnet sind, zumindest ein, insbesondere genau ein Lichtauskoppelbereich, vorzugsweise zwischen mehreren zentralen benachbarten Lichtleitkörpern jeweils zumindest ein, insbesondere jeweils genau ein Lichtauskoppelbereich angeordnet ist.

Der Begriff "zentral" bezieht sich dabei auf eine Anordnung in Bezug auf die optische Achse X₅₀₀ der Projektionsvorrichtung, insbesondere in horizontaler/seitlicher Richtung, wobei Lichtleitkörper, durch welche die Achse verläuft oder welche benachbart/nahe zu dieser Achse liegen, als zentral oder zentraler bezeichnet werden.

Insbesondere kann vorgesehen sein, dass die Lichtauskoppelbereiche derart zwischen benachbarten Lichtleitkörpern ausgebildet und/oder angeordnet sind, dass sich eine Signlight-Lichtverteilung ergibt.

Beispielsweise kann vorgesehen sein, dass der Optikkörper und die Lichtleitkörper einstückig miteinander ausgebildet, und vorzugsweise aus demselben optisch transparenten Material gebildet sind.

Weiters kann vorgesehen sein, dass die Lichteintrittsflächen der Lichtleitkörper in einem Abstand größer Null zueinander angeordnet sind, und vorzugsweise die Lichtleitkörper sich von der Lichtaustrittsfläche zu der Lichteintrittsfläche hin verjüngen.

Die Lichtleitkörper weisen beispielsweise eine konische Form auf.

Außerdem kann vorgesehen sein, dass die von den Lichtleitkörpern der Beleuchtungseinheit abgestrahlten Lichtstrahlen von der Projektionsvorrichtung als segmentierte Lichtverteilung abgebildet werden, wobei die Lichtverteilung, welche zwei oder mehr nebeneinander liegende Lichtsegmente umfasst, im Lichtbild zumindest teilweise über einer 0°-0°-Linie liegt.

Weiters kann vorgesehen sein, dass Freiflächen, insbesondere alle Freiflächen eben ausgebildet sind und/oder eine optische Struktur, etwa in Form von Rillen, in bzw. auf Freiflächen, insbesondere in bzw. auf allen Freiflächen vorgesehen ist, um in horizontaler Richtung eine Homogenisierung der erzeugten Lichtverteilung, insbesondere der Signlight-Lichtverteilung zu erzielen.

Weiters ist mit Vorteil vorgesehen, dass die Beleuchtungseinrichtung eine weitere Beleuchtungseinheit, die sogenannte Haupt-Beleuchtungseinheit, umfasst, wobei die Haupt-Beleuchtungseinheit dazu eingerichtet ist, eine Hauptlichtverteilung, insbesondere eine Abblendlichtverteilung, vorzugsweise eine Abblendlichtverteilung mit einer HD-Grenze, oder eine Vorfeld-Lichtverteilung, zu erzeugen, wobei die Hauptlichtverteilung und die segmentierte Lichtverteilung gemeinsam eine Fernlichtverteilung bilden, wenn alle Lichtsegmente der segmentierten Lichtverteilung beleuchtet sind.

Eine Lichtaustrittsfläche der Beleuchtungseinheit ist dabei vorzugsweise derart angeordnet, dass der Brennpunkt der Projektionsvorrichtung im Wesentlichen in dieser Lichtaustrittsfläche oder in einer die Lichtaustrittsfläche, insbesondere nach unten, begrenzenden Kante liegt, sodass diese Kante im Lichtbild scharf als Hell-Dunkel-Grenze, welche die Lichtverteilung nach oben begrenzt, abgebildet wird.

Schließlich kann in diesem Zusammenhang noch vorgesehen sein, dass in einem Hauptlichtbetrieb die Haupt-Beleuchtungseinheit zur Erzeugung der Lichtverteilung und die Zusatz-Lichtquelle zur Erzeugung der Signlight-Lichtverteilung aktiviert sind und die Lichtquellen der Beleuchtungseinheit deaktiviert sind, und wobei in einem Teil-Fernlichtbetrieb die Haupt-Beleuchtungseinheit und zumindest eine Lichtquelle, aber nicht alle Lichtquellen der Beleuchtungseinheit, aktiviert sind und die Zusatz-Lichtquelle gedimmt oder deaktiviert ist.

Durch die erfindungsgemäße Ausgestaltung kann im Teil-Fernlichtbetrieb die Signlight-Lichtquelle abgeschaltet (oder gedimmt) werden, sodass durch das Signlight in diesem Betriebszustand vom Signlight keine unerwünschte Streustrahlung ausgehen kann.

Unter Teil-Fernlichtbetrieb wird ein Betriebszustand verstanden, in welchem ein oder mehrere Bereiche, sogenannte Segmente, aus einer Fernlichtverteilung ausgeblendet sind, um z.B. eine Blendung des Gegenverkehrs oder vorausfahrenden Verkehrs zu verhindern.

In einem Betriebszustand, in welchem die Lichtverteilung, insbesondere eine Vorfeld-Lichtverteilung oder eine Abblendlichtverteilung,erzeugt wird, kann die Signlight-Lichtquelle eingeschaltet werden, sodass zusätzlich zu der Lichtverteilung, unabhängig von dieser, eine Signlight-Lichtverteilung erzeugt wird. Im Stand der Technik hingegen wird die Signlight-Lichtverteilung gemeinsam mit dem Vorfeld- oder Abblendlicht erzeugt (d.h., die für die Erzeugung der Vorfeld- oder Abblendlichtverteilung verantwortliche zumindest eine Lichtquelle ist auch für die Erzeugung der Signlight-Lichtverteilung verantwortlich) und kann nicht unabhängig von diesem abgeschaltet werden.

Die Erfindung bringt dementsprechend Vorteile hinsichtlich des Blendwertes, insbesondere, wenn die Beleuchtungsvorrichtung im ADB-Modus ("Adaptive Driving Beam") betrieben wird, bei dem einzelne Bereiche bzw. Segmente einer (Teil-)Fernlichtverteilung abgeschaltet werden können. Dadurch, dass in diesem Betriebszustand im Gegensatz zum Stand der Technik das Signlight abgeschaltet ist, kann es durch dieses zu keinen Blendungen in dem ausgeblendeten Bereich bzw. in den ausgeblendeten/abgeschalteten Segmenten kommen. Durch die durch die Erfindung möglich Reduzierung von unerwünschtem "Restlicht", insbesondere in ausgeblendeten Bereichen, kann die Sicherheit für alle Verkehrsteilnehmer erhöht werden. Bei Abblendlicht-Betrieb kann das Signlight zugeschaltet werden, um dem Fahrer z.B. das Lesen von Überkopfwegweisern besser zu ermöglichen.

Im "normalen" Fernlichtbetrieb hingegen kann die Signlight-Lichtquelle eingeschaltet sein.

Im Folgenden ist die Erfindung an Hand der Zeichnung näher erörtert. In dieser zeigt
Fig. 1 schematisch die Bestandteile einer Beleuchtungseinrichtung für einen Kraftfahrzeugscheinwerfer in einer Ansicht von Hinten,
Fig. 2 die Beleuchtungseinrichtung aus Figur 1 in einer schematischen, explodierten Seitenansicht,
Fig. 2a die Beleuchtungseinrichtung aus Figur 2 in zusammengebautem Zustand,
Fig. 3 eine Beleuchtungseinheit der Beleuchtungseinrichtung aus Figur 1 in einer perspektivischen, schematischen Ansicht,
Fig. 4 die Beleuchtungseinheit aus Figur 3 in einer Ansicht von schräg hinten,
Fig. 4a einen Ausschnitt einer Einmündefläche eines Optikkörpers im Bereich von Freiflächen,
Fig. 5 eine Zusatzoptikeinrichtung zur Erzeugung einer Signlight-Lichtverteilung in einer Ansicht von Hinten,
Fig. 6 die Zusatzoptikeinrichtung aus Figur 5 in einer Seitenansicht, und
Fig. 7 eine beispielhafte, schematische Darstellung einer Lichtverteilung in Form einer Abblendlichtverteilung und eine Signlight-Lichtverteilung, und
Fig. 8 eine Abblendlichtverteilung gemeinsam mit einer Teilfernlicht-Lichtverteilung ohne Signlight-Lichtverteilung.

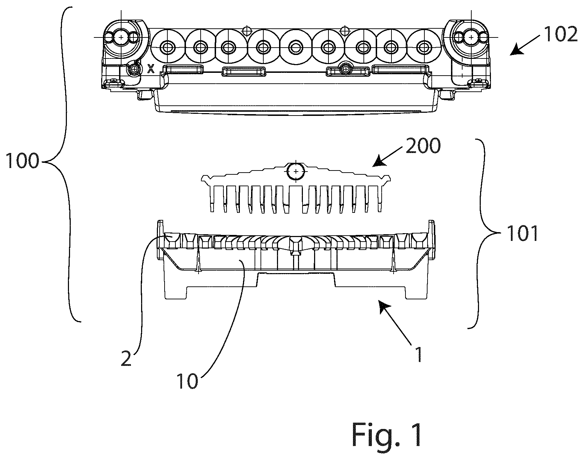

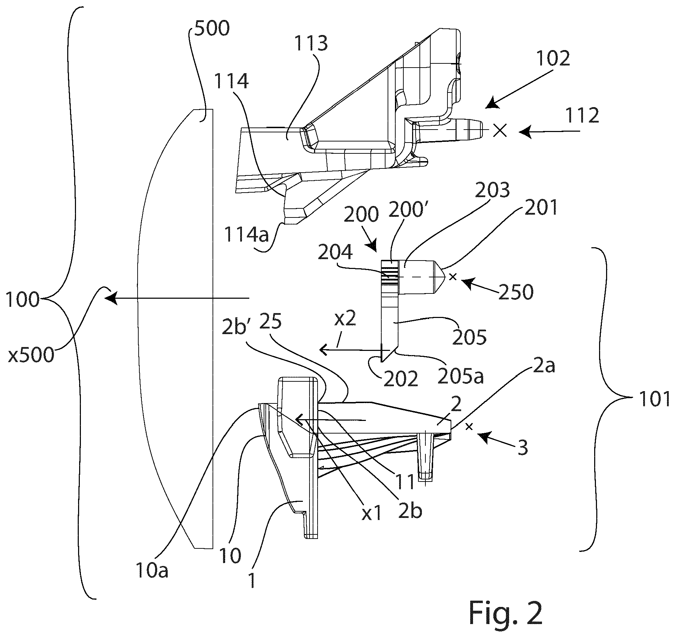

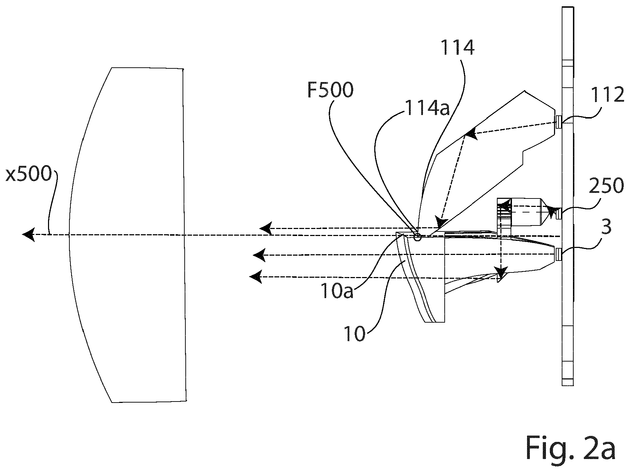

**Figur 1****,** **Figur 2** und **Figur 2a** zeigen eine erfindungsgemäße Beleuchtungseinrichtung 100 für einen Kraftfahrzeugscheinwerfer, wobei die **Figuren 1** **und** **2** eine explodierte Darstellung zeigen und **Figur 2a** die Beleuchtungseinrichtung 100 in zusammengebautem Zustand zeigt.

Die Beleuchtungseinrichtung 100 umfasst eine Beleuchtungseinheit 101 (auch als "erste" Beleuchtungseinheit bezeichnet) sowie eine weitere Beleuchtungseinheit 102, die sogenannte Haupt-Beleuchtungseinheit 102 oder "zweite" Beleuchtungseinheit.

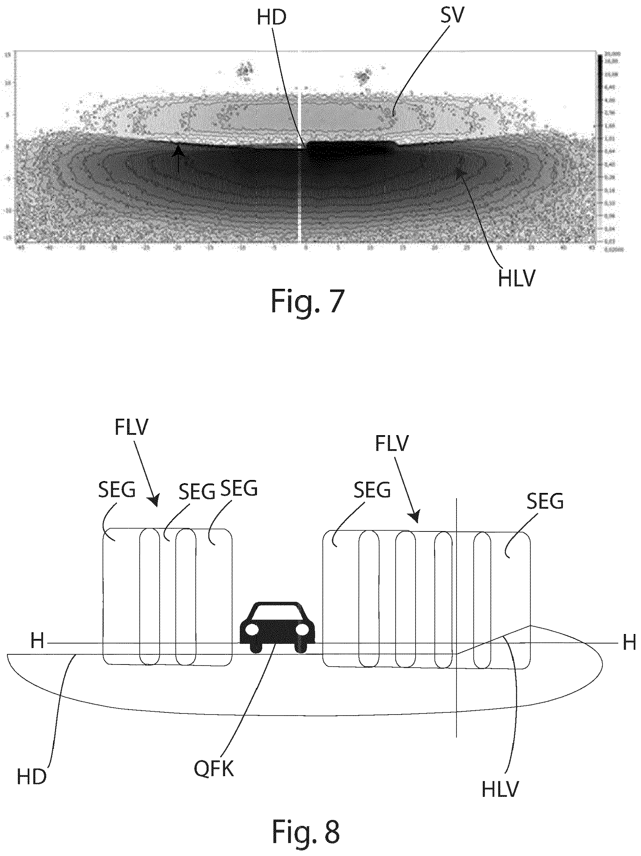

Die Haupt-Beleuchtungseinheit 102 ist dazu eingerichtet, eine Hauptlichtverteilung HLV, z.B. eine Abblendlichtverteilung mit einer HD-Grenze HD, wie in **Figur 8** gezeigt, zu erzeugen.

Die erste Beleuchtungseinheit 101 ist dazu eingerichtet, eine segmentierte Lichtverteilung FLV (Figur 8) zu erzeugen.

Gemeinsam, wenn die Haupt-Beleuchtungseinheit 102 die Hauptlichtverteilung HLV erzeugt und die erste Beleuchtungseinheit 101 ebenfalls aktiviert ist, wird eine Fernlichtverteilung erzeugt, wenn alle Lichtsegmente SEG der segmentierten Lichtverteilung FLV aktiviert sind.

Weiters kann eine ADB-Lichtfunktion realisiert werden, da einzelne Lichtsegmente SEG abschaltbar sind, wie dies exemplarisch in **Figur 8** dargestellt ist, wo jene Lichtsegmente, welche Bereiche beleuchten würden, in welchen sich ein Fahrzeug QFK, insbesondere ein Fahrzeug des Gegenverkehrs, befindet, abgeschaltet sind.

Zurückkommend auf die **Figuren 1****,** **2****,** **2a** sowie **3** - **6** ist zu erkennen, dass die Beleuchtungseinheit 101 einen Optikkörper 1 mit einer Optikkörper-Lichtaustrittsfläche 10 umfasst, wobei der Optikkörper 1 aus einem optisch transparenten Material gebildet ist.

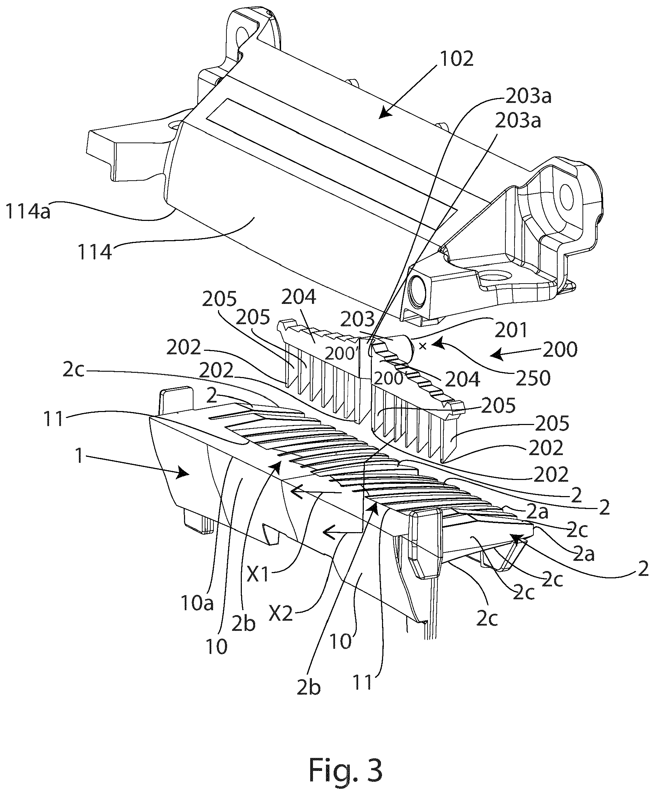

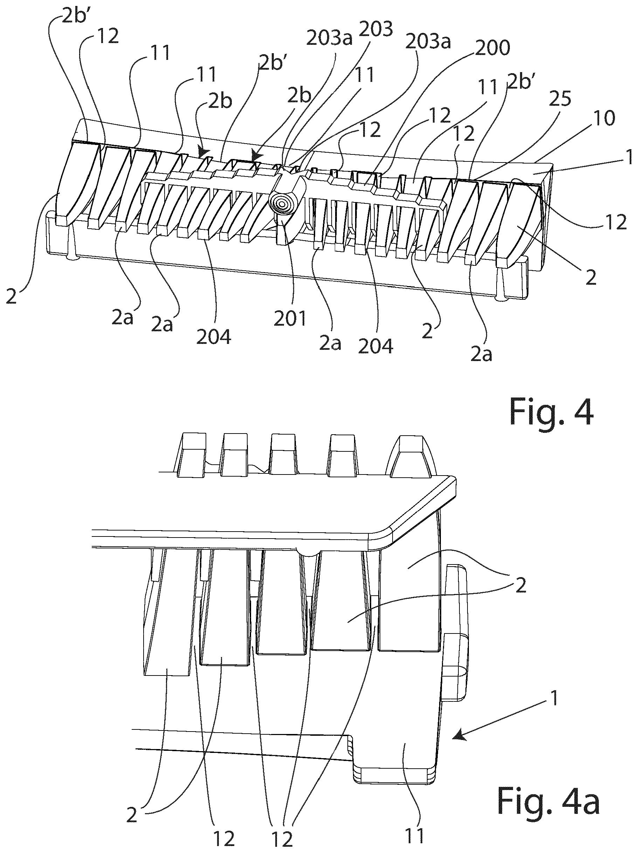

Wie insbesondere in **Figur 3** **und** **4** gut zu erkennen, umfasst die Beleuchtungseinheit 101 weiters mehrere Lichtleitkörper 2, wobei jeder Lichtleitkörper 2 eine Lichteintrittsfläche 2a und eine Lichtaustrittsfläche 2b aufweist. Für jeden Lichtleitkörper 2 ist zumindest eine Lichtquelle 3 (schematisch angedeutet als "x" in **Figur 2****,** **2a**), in der Regel in Form einer oder mehrerer LEDs, zugeordnet, wobei die zumindest eine Lichtquelle 3 eines Lichtleitkörpers 2 ausschließlich Licht in diesen Lichtleitkörper 2 über dessen Lichteintrittsfläche 2a einspeisen kann, wenn sie eingeschaltet ist.

Die Lichtleitkörper 2 sind ebenfalls aus einem optisch transparenten Material gebildet, sodass sich in einen Lichtleitkörper 2 eingekoppeltes Licht von der Lichteintrittsfläche 2a zu seiner Lichtaustrittsfläche 2b fortpflanzen kann, wobei zumindest ein Teil des sich in den Lichtleitkörper 2 eingespeisten Lichtes, welches auf seitliche Begrenzungsflächen 2c des Lichtleitkörpers 2 auftrifft, an den Begrenzungsflächen 2c totalreflektiert wird.

Die Lichtleitkörper 2 sind - in Einbaulage in einem Kraftfahrzeug - seitlich nebeneinander angeordnet. Die Lichtleitkörper 2 münden mit ihren Lichtaustrittsflächen 2b in eine der Optikkörper-Lichtaustrittsfläche 10 des Optikkörpers 1 gegenüberliegende Optikkörper-Einmündefläche 11 in den Optikkörper 1 ein.

Die Lichtleitkörper 2 sind derart angeordnet, dass Lichtaustrittsflächen 2b (der seitlich) benachbarten Lichtleitkörper 2 zueinander jeweils einen Abstand größer Null aufweisen, sodass sich jeweils zwischen zwei benachbarten Lichtleitkörpern 2 auf der Optikkörper-Eindmündefläche 11 eine Freifläche 12 ergibt, siehe **Figur 4** und **Figur 4a****.**

Beispielsweise kann vorgesehen sein, dass der Optikkörper 1 und die Lichtleitkörper 2 einstückig miteinander ausgebildet und vorzugsweise aus demselben optisch transparenten Material gebildet sind. Weiters kann vorgesehen sein, dass die Lichteintrittsflächen 2a der Lichtleitkörper 2 in einem Abstand größer Null zueinander angeordnet sind, und vorzugsweise verjüngen sich die Lichtleitkörper 2 von der Lichtaustrittsfläche 2b zu der Lichteintrittsfläche 2a hin und weisen beispielsweise eine konische Form auf.

Licht aus den Lichtleitkörpern 2 tritt über die Einmündefläche 11 in den Optikkörper 1 ein und über die Optikkörper-Lichtaustrittsfläche 10 wieder aus. Die Beleuchtungseinrichtung 100 umfasst weiters eine Projektionsvorrichtung 500 (siehe **Figur 2****,** **2a**), insbesondere eine Projektionsoptikvorrichtung, z.B. eine Projektionslinse, welche in Lichtausbreitungsrichtung nach den beiden Beleuchtungseinheiten 101, 102 angeordnet ist. Das von den Lichtquellen 3 emittierte Licht, das in den Optikkörper 1 über die Einmündefläche 11 eingekoppelt wird und das über die Lichtaustrittsfläche 10 austritt, wird von der Projektionsvorrichtung 500 in Form der segmentierten Lichtverteilung FLV abgebildet (siehe **Figur 8**).

Wie oben schon beschrieben, handelt es sich bei der Beleuchtungseinheit 101 um eine Beleuchtungseinheit zur Erzeugung einer segmentierten Lichtverteilung FLV, welche im Wesentlichen oberhalb der horizontalen 0°-0°-Linie (H-H-Linie) liegt und zusätzlich mit einer Abblend- oder Vorfeldlichtverteilung HLV ein Fernlicht bildet. Die segmentierte Lichtverteilung FLV liegt dabei Großteils oberhalb der 0°-0°-Linie, die unteren Bereiche liegen an der 0°-0°-Linie oder vorzugsweise geringfügig in bekannter Weise darunter, sodass sie an eine Abblendlicht- oder Vorfeldlichtverteilung anschließen oder diese geringfügig überlappen.

Insbesondere kann mit einer solchen segmentierten Lichtverteilung ein ADB ("Adaptive Driving Beam") realisiert werden, bei dem Bereiche oberhalb der HD-Linie, insbesondere Gegenverkehrsbereiche, ausgeblendet werden können, wie dies schon beschrieben wurde.

Weiters umfasst die Beleuchtungseinheit 101 eine Zusatzoptikeinrichtung 200, wobei die Zusatzoptikeinrichtung 200 zumindest einen, vorzugsweise wie dargestellt genau einen Lichteinkoppelbereich 201 sowie einen oder, wie dargestellt vorzugsweise mehrere Lichtauskoppelbereiche 202 aufweist. Jedem Lichteinkoppelbereich 201 ist zumindest eine Zusatz-Lichtquelle 250, insbesondere in Form von einer oder mehreren LEDs, zugeordnet. Im gezeigten beispielhaften Fall ist genau eine Zusatz-Lichtquelle 250 vorgesehen.

Wird die Zusatzlichtquelle 250 eingeschaltet, pflanzt sich zumindest ein Teil des von ihr emittierten, über den Lichteinkoppelbereich 201 in die Zusatzoptikeinrichtung 200 einkoppelten Lichtes in der Zusatzoptikeinrichtung 200 zu den Lichtauskoppelbereichen 202 fort und tritt dort aus der Zusatzoptikvorrichtung 200 aus.

Wie beschrieben, ergeben sich an der Einmündefläche 11 des Optikkörpers 1, an welcher die Lichtleitkörper 2 in diesen einmünden, jeweils freie Flächen bzw. Bereiche 12 zwischen benachbarten Lichtleitkörpern 2, welche sich die vorliegende Erfindung zu Nutze macht, und es ist jeweils zumindest ein, vorzugsweise genau ein, Lichtauskoppelbereich 202 der Zusatzoptikeinrichtung 200 zwischen zwei benachbarten Lichtleitkörpern 2 derart positioniert, dass aus einem Lichtauskoppelbereich 202 austretendes Licht über die Freifläche 12 zwischen den beiden Lichtleitkörpern 2 in den Optikkörper 1 eintritt und sich in diesem zu der Optikkörper-Lichtaustrittsfläche 10 des Optikkörpers 1 fortpflanzt.

Das so über die Zusatzoptikeinrichtung 200 in den Optikkörper 1 eingespeiste und über die Lichtaustrittsfläche 10 austretende Licht wird über die Projektionsvorrichtung 500 als eigene Lichtverteilung SV, insbesondere als Signlight-Lichtverteilung SV, abgebildet.

Die Freiflächen 12 sind beispielsweise eben ausgebildet. Es kann von Vorteil sein, wenn in den Freiflächen 12, beispielsweise in den grundsätzlich ebenen Freiflächen, eine optische Struktur, etwa in Form von Rillen, vorgesehen ist, um in horizontaler Richtung eine Homogenisierung der erzeugten Lichtverteilung, insbesondere der Signlight-Lichtverteilung SV zu erzielen.

Die Optikkörper-Lichtaustrittsfläche 10 wird nach oben hin von einer Kante 10a begrenzt. Die Kante 10a liegt vorzugsweise in etwa oder exakt auf Höhe der Oberkante 2b' der Lichtleitkörper 2b. Die Optikkörper-Lichtaustrittsfläche 10 ist - nicht beschränkt auf die vorliegend beschriebene konkrete Ausführungsform, sondern im allgemeinen Zusammenhang - vorzugsweise derart angeordnet, dass die Optikkörper-Lichtaustrittsfläche 10 in etwa einer Brennfläche der Projektionsvorrichtung 500 liegt bzw. derart, dass die Kante 10a in einem Brennpunkt der F500 der Projektionsvorrichtung 500 liegt. Dadurch ergibt es sich eine Abbildung der Lichtverteilung FLV mit der gewünschten Schärfe, insbesondere der Lichtsegmente SEG. Insbesondere wird die Kante 10a im Lichtbild als untere, scharfe Begrenzung der Lichtsegmente SEG abgebildet.

Gleiches gilt für die Haupt-Beleuchtungseinheit 102, die wie beschrieben dazu eingerichtet, eine Hauptlichtverteilung HLV, z.B. eine Abblendlichtverteilung mit einer HD-Grenze HD, wie in **Figur 7 und 8** gezeigt, zu erzeugen. Beispielsweise umfasst die Haupt-Beleuchtungseinheit 102 eine oder mehrere Lichtquellen 112, insbesondere eine oder mehrere LEDs, die in bekannter Weise im Zusammenspiel mit einem Optikkörper 113, der eine Lichtaustrittsfläche 114 umfasst, die Hauptlichtverteilung HLV erzeugen. Dabei wird das aus der Lichtaustrittsfläche 114 des Optikkörpers 113 austretende Licht von der Projektionsvorrichtung 500 entsprechend in den Verkehrsraum abgebildet. Die Lichtaustrittsfläche 114 wird nach unten von einer Kante 114a begrenzt, welche in der Hauptlichtverteilung (Abblendlicht- oder Vorfeldlichtverteilung) als scharfe Linie bzw.

Grenze, die sogenannte Hell-Dunkel-Grenze (HD-Grenze), abgebildet wird, welche diese Lichtverteilung nach oben begrenzt. Um eine Hauptlichtverteilung mit gewünschter Schärfe, insbesondere mit gewünschter Schärfe der HD-Grenze, zu erzeugen, liegt die Lichtaustrittsfläche 114 im Wesentlichen in der Brennfläche der Projektionsvorrichtung 500 bzw. liegt der Brennpunkt F₅₀₀ im Wesentlichen in bzw. an der Kante 114a.

Durch die Verwendung einer eigenen bzw. eigener Lichtquellen 250 zur Erzeugung einer eigenen Lichtverteilung SV, insbesondere einer Signlight-Lichtverteilung, wobei diese eigene bzw. eigenen Lichtquellen 250 unabhängig von der/den Lichtquellen(n) 3 der Beleuchtungseinheit 101 und auch unabhängig von der/den Lichtquelle(n) 112 der Haupt-Beleuchtungseinheit 102 betrieben werden kann/können, muss die Signlight-Lichtverteilung SV nicht permanent aktiviert sein, weder im Abblend-/Vorfeldlichtbetrieb noch im ADB-Betrieb. Insbesondere im ADB-Betrieb ergibt sich damit der Vorteil, dass bei ausgeblendeten Lichtsegementen in der segmentierten Lichtverteilung FLV eine Blendung in den ausgeblendeten Bereichen durch das Signlight SV verhindert werden kann, wenn dieses abgeschaltet ist, oder - bei lediglich gedimmter Lichtquelle 250 - das Risiko einer Blendung reduziert werden kann.

Die Lichtquelle 250 kann beliebig ein- oder ausgeschaltet sowie unterschiedlich gedimmt werden, sodass individuell auf die unterschiedlichen Signlight Vorgaben von ECE, CCC und FMVSS eingegangen werden kann. Dies gilt natürlich im allgemeinen Zusammenhang der vorliegenden Erfindung und ist nicht beschränkt auf ein konkretes Ausführungsbeispiel.

Mit Vorteil ist weiters wie gezeigt vorgesehen, dass die Lichtauskoppelbereiche 202 unterhalb einer Oberkante 2b'der Lichtaustrittsflächen 2b in die Freiflächen 12 einspeisen. Die Lichtauskoppelbereiche 202 sind typischer Weise zur den Freiflächen beabstandet, können an diesen aber auch anliegen.

Das aus den Lichtauskoppelbereichen 2b stammende Licht wird üblicher Weise in einen Bereich oberhalb einer horizontalen 0°-0°-Linie im Lichtbild abgebildet und erzeugt somit die segmentierte Lichtverteilung FLV. Bei einer vertikal invertierenden Projektionsvorrichtung 500 sind die Lichtaustrittsflächen 2b der Lichtleitkörper 2 dabei so positioniert, dass sie mit ihrer Oberkante 2b' in etwa auf Höhe oder knapp oberhalb der optischen Achse X₅₀₀ der Projektionsvorrichtung 500 liegen. Durch die invertierende Wirkung der Projektionsvorrichtung 500 wird Licht aus den Lichtaustrittsflächen 2b (großteils) oberhalb der 0°-0°-Linie abgebildet, wobei Licht aus dem Bereich der Oberkante 2b' im unteren Bereich der Lichtverteilung, nahe zu der 0°-0°-Linie, insbesondere knapp darunter abgebildet wird. (Falls die Oberkante 2b' genau auf der optischen Achse X₅₀₀ der Projektionsvorrichtung 500 liegt, wird aus dem Bereich der Oberkante 2b' stammendes Licht auf die 0°-0°-Linie abgebildet.)

Dementsprechend wird Licht aus den unterhalb der Oberkante 2b' liegenden Lichtauskoppelbereichen 202 der Zusatzoptikeinrichtung 200 in einem Abstand oberhalb einer unteren Begrenzung der segmentierten Lichtverteilung FLV, vorzugsweise oberhalb der horizontalen 0°-0°-Linie in der Lichtverteilung abgebildet, sodass ein Abstand zwischen der Hauptlichtverteilung und der mit dem Licht aus den Lichtauskoppelbereichen 202 gebildeten Lichtverteilung SV entsteht.

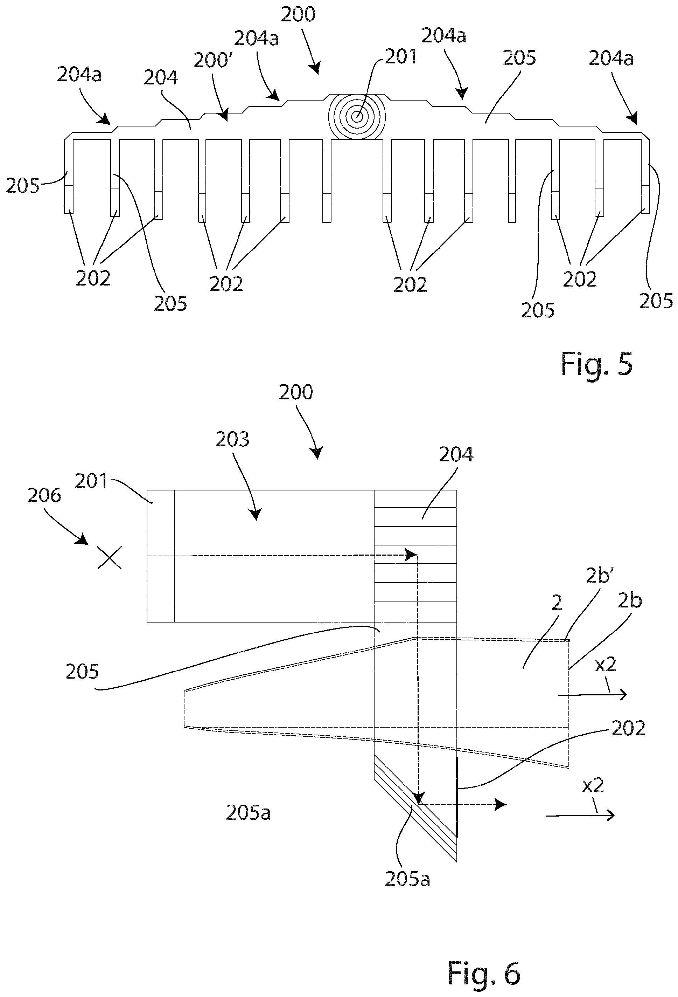

Vorzugsweise ist vorgesehen, dass eine Haupt-Lichtaustrittsrichtung X2 des aus einem Lichtauskoppelbereich 202 austretenden Lichtes in etwa parallel zu der Lichtaustrittsrichtung X1, in welcher Licht aus einem zu dem Lichtauskoppelbereich 202 benachbarten Lichtleitkörper 2 verläuft, gerichtet ist (**Figur 3****,** **Figur 6**).

In diesem Zusammenhang sei angemerkt, dass typischer Weise aus den Lichtleitkörpern 2 kein parallel gerichtetes Licht austritt, die Lichtaustrittsrichtung X1 bezeichnet in diesem Fall die resultierende Richtung aller austretenden Lichtstrahlen.

Vorzugsweise ist die Haupt-Lichtaustrittsrichtung X2 des aus einem Lichtauskoppelbereich 202 bzw. aus den Lichtauskoppelbereichen 202 austretenden Lichtes derart gerichtet, dass das Licht von der Projektionsvorrichtung 500 in einen Bereich oberhalb einer 0°-0°-Linie abgebildet wird, insbesondere derart, dass das Licht aller Lichtauskoppelbereiche 202 eine Signlight-Lichtverteilung SV bildet.

Die Zusatzoptikvorrichtung 200 besteht, wie gezeigt, vorzugsweise aus einem Körper 200', der aus einem lichtleitenden Material gebildet ist, wobei dieser Körper 200'den Lichteinkoppelbereich 201 sowie an diesen anschließend einen Zuleitungsbereich 203 aufweist, wobei der Zuleitungsbereich 203 in einen Verteilbereich 204 übergeht, über welchen das von der zumindest einen Zusatzlichtquelle 250 kommende Licht auf den einen oder die mehreren Lichtauskoppelbereiche 202 aufgeteilt wird.

Vorzugsweise sind die Lichtauskoppelbereiche 202 ebenfalls Teil des Körpers 200'.

Der Lichteinkoppelbereich 201 richtet vorzugsweise die eingekoppelten Lichtstrahlen parallel, beispielsweise durch eine Fresnellinsen-Struktur, siehe **Figur 5****.**

Vorzugsweise umfasst der Lichteinkoppelbereich 201 optische Elemente bzw. eine optische Struktur, welche das eingekoppelte Licht parallel richtet. Beispielsweise weist der Lichteinkoppelbereich 201 eine Fresnellinsen-Struktur (siehe **Figur 5**) auf oder ist in Form eines Kollimators ausgebildet. Das parallel gerichtete Licht kann sich somit in der Zusatzoptikeinrichtung 200 in weiterer Folge mittels Totalreflexion fortpflanzen, indem es bei Fortpflanzung durch Zuleitungsbereich 203 am Ende des Zuleitungsbereiches 203 auf eine Umlenkstruktur, die im konkreten Fall aus zwei Umlenkflächen 203a besteht, wo das parallele Licht aus dem Zuleitungsbereich 203 in den Verteilbereich 204 umgelenkt wird.

Weiters ist ein nicht näher dargestellter Bereich vorgesehen, welcher Licht, das sich in dem Zuleitungsbereich 203 fortpflanzt, in bekannter Weise, z.B. durch eine oder mehrere Umlenkflächen, auf die Verteilbereiche 204 aufteilt.

Der Zuleitungsbereich 203 kann wie gezeigt in etwa parallel zu den Lichtleitkörpern 2 verlaufen und der Verteilbereich 204 quer zu den Lichtleitkörpern 2 und/oder quer zu dem Zuleitungsbereich 203, insbesondere im Wesentlichen normal zu dem Zuleitungsbereich 203 verläuft **(****Figur 5, Figur 6**)**.** Weiters ist vorgesehen, dass pro Lichtauskoppelbereich 202 ein Umleitungsabschnitt 205 vorgesehen ist, welcher mit dem Verteilbereich 204 verbunden, insbesondere mit diesem einstückig ausgebildet ist, mit welchem Umleitungsabschnitt 205 Licht dem Lichtauskoppelbereich 202 zugeführt wird.

Dadurch ergibt sich beispielsweise eine in **Figur 5** gezeigte Kamm-Form der Zusatzoptikeinrichtung 200.

Der Verteilbereich 204 umfasst eine optische Struktur 204a, die derart ausgebildet ist, dass sich einerseits Licht entlang der Verteilbereiche 204 fortpflanzt, andererseits ein Teil davon in die Umleitungsabschnitte 205 umgelenkt wird. Solche Strukturen sind hinlänglich bekannt und werden hier nicht näher erörtert **(****Figur 5, 6****).**

Vorzugsweise weist ein Umleitungsabschnitt 205 jeweils einen Umlenkbereich 205a auf, welcher das von dem Verteilbereich 204 in den Umleitungsabschnitt 205 eingespeiste Licht in die Haupt-Lichtaustrittsrichtung X2 umlenkt **(****Figur 6****).**

In dem gezeigten Ausführungsbeispiel ist beidseits des zentralen Lichtleitkörpers zwischen benachbarten Lichtleitkörpern 2 jeweils genau ein Lichtauskoppelbereich 202 der Zusatzoptikeinrichtung 200 angeordnet, wobei sich zwischen den jeweils 3 äußersten Lichtleitkörpern sich kein Lichtauskoppelbereich befindet. Diese Anordnung kann derart gewählt werden, dass sich die gewünschte oder vorgeschriebene horizontale Breite der Signlight-Lichtverteilung SV ergibt.

Die Lichtauskoppelbereiche 202 sind zu den Freiflächen 12 des Optikkörpers 1 vorzugsweise beabstandet. Beim Zusammenbau wird beispielsweise die Zusatzoptik 200 von oben in die gewünschte Position in den Optikkörper 1 eingeschoben und kann zur Fixierung zwischen dem Optikkörper 1 und dem Optikkörper 113 der Haupt-Beleuchtungseinheit 102 eingeklemmt werden. Weiters kann noch ein zusätzliches nicht dargestelltes Halteelement vorgesehen sein.

Die Erfindung bringt dementsprechend Vorteile hinsichtlich des Blendwertes, insbesondere, wenn die Beleuchtungsvorrichtung im ADB-Modus ("Adaptive Driving Beam") betrieben wird, bei dem einzelne Bereiche bzw. Segmente einer (Teil-)Fernlichtverteilung abgeschaltet werden können. Dadurch, dass in diesem Betriebszustand im Gegensatz zum Stand der Technik das Signlight unabhängig abgeschaltet oder gedimmt werden kann, kann es durch dieses zu keinen Blendungen in dem ausgeblendeten Bereich bzw. in den ausgeblendeten/abgeschalteten Segmenten kommen oder das Risiko einer Blendung kann reduziert werden. Durch die durch die Erfindung möglich Reduzierung oder Eliminierung von unerwünschtem "Restlicht", insbesondere in ausgeblendeten Bereichen, kann die Sicherheit für alle Verkehrsteilnehmer erhöht werden. Bei Abblendlicht-Betrieb kann das Signlight zugeschaltet werden, um dem Fahrer z.B. das Lesen von Überkopfwegweisern besser zu ermöglichen. Im "normalen" Fernlichtbetrieb kann die Signlight-Lichtquelle eingeschaltet werden.

## Patentansprüche

1. Beleuchtungseinrichtung (100) für einen Kraftfahrzeugscheinwerfer, wobei die Beleuchtungseinrichtung (100) eine Beleuchtungseinheit (101) umfasst, wobei
die Beleuchtungseinheit (101) umfasst:
- einen Optikkörper (1) mit einer Optikkörper-Lichtaustrittsfläche (10), wobei der Optikkörper (1) aus einem optisch transparenten Material gebildet ist,
- mehrere Lichtleitkörper (2), wobei jeder Lichtleitkörper (2) eine Lichteintrittsfläche (2a) und eine Lichtaustrittsfläche (2b) aufweist,
- für jeden Lichtleitkörper (2) zumindest eine Lichtquelle (3), wobei die zumindest eine Lichtquelle (3) eines Lichtleitkörpers (2) nur in diesen Lichtleitkörper (2) Licht einspeisen kann, und wobei das Licht der zumindest einen Lichtquelle (3) eines Lichtleitkörpers (2) über die Lichteintrittsfläche (2a) des Lichtleitkörpers (2) in diesen eingespeist wird,
wobei die Lichtleitkörper (2) aus einem optisch transparenten Material gebildet sind, sodass sich in einen Lichtleitkörper (2) eingekoppeltes Licht von der Lichteintrittsfläche (2a) zu der Lichtaustrittsfläche (2b) fortpflanzen kann und wobei zumindest ein Teil des sich in den Lichtleitkörper (2) eingespeisten Lichtes, welches auf seitliche Begrenzungsflächen (2c) des Lichtleitkörpers (2) auftrifft, an den Begrenzungsflächen (2c) totalreflektiert wird,
wobei die Lichtleitkörper (2) seitlich nebeneinander angeordnet sind, und wobei
die Lichtleitkörper (2) mit ihren Lichtaustrittsflächen (2b) in einer der Optikkörper-Lichtaustrittsfläche (10) des Optikkörpers (1) gegenüberliegenden Optikkörper-Einmündefläche (11) in den Optikkörper (1) einmünden,
wobei die Lichtleitkörper (2) derart angeordnet sind, dass Lichtaustrittsflächen (2b) benachbarter Lichtleitkörper (2) zueinander einen Abstand größer Null aufweisen, sodass sich jeweils zwischen zwei benachbarten Lichtleitkörpern (2) auf der Optikkörper-Eindmündefläche (11) eine Freifläche (12) ergibt,
und wobei die Beleuchtungseinrichtung (100) weiters eine Projektionsvorrichtung (500) umfasst, welche das von den Lichtquellen (3) emittierte Licht in Form einer segmentierten Lichtverteilung (FLV) abbildet,
**dadurch gekennzeichnet, dass**
die Beleuchtungseinheit (101) weiters eine Zusatzoptikeinrichtung (200) umfasst, wobei die Zusatzoptikeinrichtung (200) zumindest einen Lichteinkoppelbereich (201) sowie einen oder mehrere Lichtauskoppelbereiche (202) aufweist, wobei jedem Lichteinkoppelbereich (201) zumindest eine Zusatz-Lichtquelle (250) zugeordnet ist, und wobei zumindest ein Teil des von einer Zusatzlichtquelle (250) über einen Lichteinkoppelbereich (201) in die Zusatzoptikeinrichtung (250) einkoppelten Lichtes sich in der Zusatzoptikeinrichtung (250) zu der einen oder den mehreren Lichtauskoppelbereichen (202) fortpflanzt und dort aus der Zusatzoptikvorrichtung (200) austritt,
und wobei jeweils zumindest ein, vorzugsweise genau ein, Lichtauskoppelbereich (202) zwischen zwei benachbarten Lichtleitkörpern (2) angeordnet ist, derart, dass aus dem Lichtauskoppelbereich (202) austretendes Licht über die Freifläche (12) zwischen den beiden Lichtleitkörpern (2) in den Optikkörper (1) eintreten und sich in diesem zu der Optikkörper-Lichtaustrittsfläche (10) des Optikkörpers (1) fortpflanzen kann.

2. Beleuchtungseinrichtung nach Anspruch 1, wobei die Lichtauskoppelbereiche (202) unterhalb einer bzw. der Oberkanten (2b') der Lichtaustrittsflächen (2b) angeordnet sind.

3. Beleuchtungseinrichtung nach einem der vorhergehenden Ansprüche, wobei eine Haupt-Lichtaustrittsrichtung (X2) des aus einem Lichtauskoppelbereich (202) austretenden Lichtes in etwa parallel zu der Lichtaustrittsrichtung (X1), in welcher Licht aus einem zu dem Lichtauskoppelbereich (202) benachbarten Lichtleitkörper (2) verläuft, gerichtet ist.

4. Beleuchtungseinrichtung nach einem der vorhergehenden Ansprüche, wobei eine Haupt-Lichtaustrittsrichtung (X2) des aus einem Lichtauskoppelbereich (202) austretenden Lichtes derart gerichtet ist, dass das Licht von der Projektionsvorrichtung (500) in einen Bereich oberhalb einer 0°-0°-Linie abgebildet wird, insbesondere derart, dass das Licht aller Lichtauskoppelbereiche (202) eine Signlight-Lichtverteilung (SV) bildet.

5. Beleuchtungseinrichtung nach einem der vorhergehenden Ansprüche, **wobei** die Zusatzoptikvorrichtung (200) aus einem Körper (200') besteht, der aus einem lichtleitenden Material gebildet ist, **wobei** vorzugsweise der Körper (200'), welcher die Zusatzoptikvorrichtung (200) bildet, den zumindest einen Lichteinkoppelbereich (201) sowie an diesen anschließend zumindest einen Zuleitungsbereich (203) aufweist, wobei der zumindest eine Zuleitungsbereich (203) in einen Verteilbereich (204) übergeht, über welchen das von der zumindest einen Zusatzlichtquelle (250) kommende Licht auf den einen oder die mehreren Lichtauskoppelbereiche (202) aufgeteilt wird.

6. Beleuchtungseinrichtung nach Anspruch 5, **wobei** zwei oder mehr Lichtauskoppelbereiche (202) vorgesehen sind, und wobei vorzugsweise der Verteilbereich (204) und die Lichtauskoppelbereiche (202) eine kammartige Form aufweisen.

7. Beleuchtungseinrichtung nach Anspruch 5 oder 6, **wobei** der Zuleitungsbereich (203) in etwa parallel zu den Lichtleitkörpern (2) verläuft und der Verteilbereich (204) quer zu den Lichtleitkörpern (2) und/oder quer zu dem Zuleitungsbereich (203), insbesondere im Wesentlichen normal zu dem Zuleitungsbereich (203) verläuft, und wobei pro Lichtauskoppelbereich (202) ein Umleitungsabschnitt (205) vorgesehen ist, welcher mit dem Verteilbereich (204) verbunden, insbesondere mit diesem einstückig ausgebildet ist, mit welchem Umleitungsabschnitt (205) Licht dem Lichtauskoppelbereich (202) zugeführt wird, wobei vorzugsweise ein Umleitungsabschnitt (205) einen ersten Umlenkbereich (205a) aufweist, welcher das von dem Verteilbereich (204) in den Umleitungsabschnitt (205) eingespeiste Licht in die Haupt-Lichtaustrittsrichtung (X2) umlenkt.

8. Beleuchtungseinrichtung nach einem der vorhergehenden Ansprüche, **wobei** zwischen allen benachbarten Lichtleitkörpern (2) jeweils zumindest ein, insbesondere genau ein Lichtauskoppelbereich (202) angeordnet ist, oder wobei zumindest zwischen zwei benachbarten Lichtleitkörpern (2), welche zentral angeordnet sind, zumindest ein, insbesondere genau ein Lichtauskoppelbereich (202), vorzugsweise zwischen mehreren zentralen benachbarten Lichtleitkörpern (2) jeweils zumindest ein, insbesondere jeweils genau ein Lichtauskoppelbereich (202) angeordnet ist.

9. Beleuchtungseinrichtung nach einem der vorhergehenden Ansprüche, **wobei** die Lichtauskoppelbereiche (202) derart zwischen benachbarten Lichtleitkörpern (2) ausgebildet und/oder angeordnet sind, dass sich eine Signlight-Lichtverteilung ergibt.

10. Beleuchtungseinrichtung nach einem der vorhergehenden Ansprüche, **wobei** der Optikkörper (1) und die Lichtleitkörper (2) einstückig miteinander ausgebildet, vorzugsweise aus demselben optisch transparenten Material gebildet sind.

11. Beleuchtungseinrichtung nach einem der vorhergehenden Ansprüche, **wobei** die Lichteintrittsflächen (2a) der Lichtleitkörper (2) in einem Abstand größer Null zueinander angeordnet sind, und vorzugsweise die Lichtleitkörper (2) sich von der Lichtaustrittsfläche (2b) zu der Lichteintrittsfläche (2a) hin verjüngen.

12. Beleuchtungseinrichtung nach einem der vorhergehenden Ansprüche, **wobei** die von den Lichtleitkörpern (2) der Beleuchtungseinheit (101) abgestrahlten Lichtstrahlen von der Projektionsvorrichtung (500) als segmentierte Lichtverteilung (FLV) abgebildet werden, wobei die Lichtverteilung (FLV), welche zwei oder mehr nebeneinander liegende Lichtsegmente (SEG) umfasst, zumindest teilweise, insbesondere großteils über einer 0°-0°-Linie liegt.

13. Beleuchtungseinrichtung nach einem der vorhergehenden Ansprüche, **wobei** Freiflächen (12), insbesondere alle Freiflächen eben ausgebildet sind und/oder eine optische Struktur, etwa in Form von Rillen, in bzw. auf Freiflächen (12), insbesondere in bzw. auf allen Freiflächen vorgesehen ist, um in horizontaler Richtung eine Homogenisierung der erzeugten Lichtverteilung, insbesondere der Signlight-Lichtverteilung SV zu erzielen.

14. Beleuchtungseinrichtung nach einem der vorhergehenden Ansprüche, **wobei** die Beleuchtungseinrichtung (100) eine weitere Beleuchtungseinheit (102), die sogenannte Haupt-Beleuchtungseinheit (102), umfasst, wobei die Haupt-Beleuchtungseinheit (102) dazu eingerichtet ist, eine Hauptlichtverteilung (HLV), insbesondere eine Abblendlichtverteilung, vorzugsweise eine Abblendlichtverteilung mit einer HD-Grenze, oder eine Vorfeld-Lichtverteilung, zu erzeugen, wobei die Hauptlichtverteilung (HLV) und die segmentierte Lichtverteilung (FLV) gemeinsam eine Fernlichtverteilung bilden, wenn alle Lichtsegmente (SEG) der segmentierten Lichtverteilung (FLV) beleuchtet sind, und wobei beispielsweise in einem Hauptlichtbetrieb die Haupt-Beleuchtungseinheit (102) zur Erzeugung der Lichtverteilung (LV) und die Zusatz-Lichtquelle (250) zur Erzeugung der Signlight-Lichtverteilung (SV) aktiviert sind und die Lichtquellen (3) der Beleuchtungseinheit (101) deaktiviert sind, und wobei in einem Teil-Fernlichtbetrieb die Haupt-Beleuchtungseinheit (102) und zumindest eine Lichtquelle (3), aber nicht alle Lichtquellen (3) der Beleuchtungseinheit (101), aktiviert sind und die Zusatz-Lichtquelle (250) gedimmt oder deaktiviert ist.

15. Kraftfahrzeugscheinwerfer mit zumindest einer Beleuchtungseinrichtung nach einem der Ansprüche 1 bis 14.

## Claims

1. Lighting device (100) for a motor vehicle headlight, wherein the lighting device (100) comprises a lighting unit (101), wherein
the lighting unit (101) comprises:
- an optical body (1) with an optical body light exit surface (10), wherein the optical body (1) is formed from an optically transparent material,
- a plurality of light guide bodies (2), each light guide body (2) having a light entry surface (2a) and a light exit surface (2b),
- for each light guide body (2), at least one light source (3), wherein the at least one light source (3) of a light guide body (2) can only feed light into this light guide body (2), and wherein the light from the at least one light source (3) of a light guide body (2) is fed into the light guide body (2) via the light entry surface (2a) of the light guide body (2),
wherein the light guide bodies (2) are formed from an optically transparent material, so that light coupled into a light guide body (2) can propagate from the light entry surface (2a) to the light exit surface (2b), and wherein at least part of the light fed into the light guide body (2) which strikes lateral boundary surfaces (2c) of the light guide body (2) is totally reflected at the boundary surfaces (2c),
wherein the light guide bodies (2) are arranged side by side, and wherein
the light guide bodies (2) open into the optical body (1) with their light-emitting surfaces (2b) at an optical body opening surface (11) opposite the optical body light-emitting surface (10) of the optical body (1),
wherein the light guide bodies (2) are arranged such that light-emitting surfaces (2b) of adjacent light guide bodies (2) have a distance greater than zero between them, so that there is a free space (12) between two adjacent light guide bodies (2) on the optical body inlet surface (11),
and wherein the illumination device (100) further comprises a projection device (500) which projects the light emitted by the light sources (3) in the form of a segmented light distribution (FLV),
**characterized in that**
the lighting unit (101) further comprises an additional optical device (200), wherein the additional optical device (200) has at least one light coupling area (201) and one or more light decoupling areas (202), wherein at least one additional light source (250) is assigned to each light coupling area (201) has at least one additional light source (250) assigned to it, and wherein at least part of the light coupled into the additional optical device (250) by an additional light source (250) via a light coupling area (201) propagates in the additional optical device (250) to the one or more light decoupling areas (202) and exits the additional optical device (200) there,
and wherein at least one, preferably exactly one, light output area (202) is arranged between two adjacent light guide bodies (2) in such a way that light (202) can enter the optical body (1) via the free surface (12) between the two light guide bodies (2) and propagate in the latter to the optical body light exit surface (10) of the optical body (1).

2. Lighting device according to claim 1, wherein the light decoupling areas (202) are arranged below one or the upper edges (2b') of the light exit surfaces (2b).

3. Lighting device according to one of the preceding claims, wherein a main light emission direction (X2) of the light emitted from a light decoupling area (202) is approximately parallel to the light emission direction (X1) in which light is emitted from an adjacent light guide body (2) adjacent to the light decoupling area (202).

4. Lighting device according to one of the preceding claims, wherein a main light emission direction (X2) of the light emitted from a light decoupling area (202) is directed in such a way that the light is projected by the projection device (500) into an area above a 0°-0° line, in particular in such a way that the light from all light decoupling areas (202) forms a Signlight light distribution (SV).

5. Lighting device according to one of the preceding claims, wherein the additional optical device (200) consists of a body (200') formed from a light-conducting material, wherein preferably the body (200') forming the additional optical device (200) has at least one light coupling area (201) and, adjacent to this, at least one feed area (203), wherein the at least one feed area (203) merges into a distribution area (204) via which the light coming from the at least one additional light source (250) is distributed to the one or more light decoupling areas (202).

6. Lighting device according to claim 5, wherein two or more light decoupling areas (202) are provided, and wherein preferably the distribution area (204) and the light decoupling areas (202) have a comb-like shape.

7. Lighting device according to claim 5 or 6, wherein the supply area (203) runs approximately parallel to the light guide bodies (2) and the distribution area (204) runs transversely to the light guide bodies (2) and/or transversely to the supply area (203), in particular substantially normal to the supply area (203), and wherein a diversion section (205) is provided for each light decoupling area (202), which is connected to the distribution area (204), in particular is formed integrally therewith, with which diversion section (205) light is fed to the light decoupling area (202), wherein preferably a diversion section (205) has a first deflection area (205a) which deflects the light fed from the distribution area (204) into the diversion section (205) in the main light exit direction (X2).

8. Lighting device according to one of the preceding claims, wherein at least one, in particular exactly one light decoupling area (202) is arranged between all adjacent light guide bodies (2), or wherein at least between two adjacent light guide bodies (2) which are arranged centrally, at least one, in particular exactly one light decoupling area (202) is arranged, preferably between several centrally adjacent light guide bodies (2), at least one, in particular exactly one light decoupling area (202) is arranged in each case.

9. Lighting device according to one of the preceding claims, wherein the light decoupling areas (202) are formed and/or arranged between adjacent light guide bodies (2) in such a way that a Signlight light distribution is achieved.

10. Lighting device according to one of the preceding claims, wherein the optical body (1) and the light guide bodies (2) are formed integrally with one another, preferably from the same optically transparent material.

11. Lighting device according to one of the preceding claims, wherein the light entry surfaces (2a) of the light guide bodies (2) are arranged at a distance greater than zero from each other, and preferably the light guide bodies (2) taper from the light exit surface (2b) to the light entry surface (2a).

12. Lighting device according to one of the preceding claims, wherein the light beams emitted by the light guide bodies (2) of the lighting unit (101) are imaged by the projection device (500) as segmented light distribution (FLV), wherein the light distribution (FLV), which comprises two or more adjacent light segments (SEG), lies at least partially, in particular largely, above a 0°-0° line.

13. Lighting device according to one of the preceding claims, wherein free surfaces (12), in particular all free surfaces, are flat and/or an optical structure, for example in the form of grooves, is provided in or on free surfaces (12), in particular in or on all free surfaces, in order to achieve homogenization of the generated light distribution, in particular the Signlight light distribution SV, in the horizontal direction.

14. Lighting device according to one of the preceding claims, wherein the lighting device (100) comprises a further lighting unit (102), the so-called main lighting unit (102), , wherein the main lighting unit (102) is designed to generate a main light distribution (HLV), in particular a low beam distribution, preferably a low beam distribution with an HD limit, or a front field light distribution, wherein the main light distribution (HLV) and the segmented light distribution (FLV) together form a high beam distribution when all light segments (SEG) of the segmented light distribution (FLV) are illuminated, and wherein, for example, in a main light mode, the main lighting unit (102) for generating the light distribution (LV) and the additional light source (250) for generating the signal light distribution (SV) are activated and the light sources (3) of the lighting unit (101) are deactivated, and wherein, in a partial high beam mode, the main lighting unit (102) and at least one light source (3), but not all light sources (3) of the lighting unit (101) are activated and the additional light source (250) is dimmed or deactivated.

15. Motor vehicle headlamp with at least one lighting device according to one of claims 1 to 14.

## Revendications

1. Dispositif d'éclairage (100) pour un phare de véhicule automobile, le dispositif d'éclairage (100) comprenant une unité d'éclairage (101),
l'unité d'éclairage (101) comprenant :
- un corps optique (1) avec une surface de sortie de lumière (10), le corps optique (1) étant formé d'un matériau optiquement transparent,
- plusieurs corps conducteurs de lumière (2), chaque corps conducteur de lumière (2) présentant une surface d'entrée de lumière (2a) et une surface de sortie de lumière (2b),
- pour chaque corps conducteur de lumière (2), au moins une source lumineuse (3), la au moins une source lumineuse (3) d'un corps conducteur de lumière (2) ne pouvant alimenter en lumière que ce corps conducteur de lumière (2), et la lumière de la au moins une source lumineuse (3) d'un corps conducteur de lumière (2) étant injectée dans celui-ci par la surface d'entrée de lumière (2a) du corps conducteur de lumière (2),
les corps conducteurs de lumière (2) étant constitués d'un matériau optiquement transparent, de sorte que la lumière couplée dans un corps conducteur de lumière (2) peut se propager de la surface d'entrée de lumière (2a) vers la surface de sortie de lumière (2b) et au moins une partie de la lumière injectée dans le corps conducteur de lumière (2) et qui frappe les surfaces latérales de délimitation (2c) du corps conducteur de lumière (2) est totalement réfléchie au niveau des surfaces de délimitation (2c),
les corps conducteurs de lumière (2) étant disposés latéralement les uns à côté des autres, et
les corps conducteurs de lumière (2) débouchent avec leurs surfaces de sortie de lumière (2b) dans le corps optique (1) au niveau d'une surface d'embouchure (11) du corps optique opposée à la surface de sortie de lumière (10) du corps optique (1),
les corps conducteurs de lumière (2) étant disposés de telle sorte que les surfaces de sortie de lumière (2b) des corps conducteurs de lumière (2) voisins présentent entre elles une distance supérieure à zéro, de sorte qu'il se forme entre deux corps conducteurs de lumière (2) voisins une surface libre (12) sur la surface d'embouchure (11) du corps optique,
et le dispositif d'éclairage (100) comprenant en outre un dispositif de projection (500) qui reproduit la lumière émise par les sources lumineuses (3) sous la forme d'une répartition lumineuse segmentée (FLV),
**caractérisé en ce que**
l'unité d'éclairage (101) comprend en outre un dispositif optique supplémentaire (200), le dispositif optique supplémentaire (200) présentant au moins une zone de couplage de lumière (201) ainsi qu'une ou plusieurs zones de découplage de lumière (202), au moins une source de lumière supplémentaire (250) étant associée à chaque zone de couplage de lumière (201) est associée au moins une source lumineuse supplémentaire (250), et au moins une partie de la lumière injectée par une source lumineuse supplémentaire (250) dans le dispositif optique supplémentaire (250) via une zone d'injection de lumière (201) se propage dans le dispositif optique supplémentaire (250) vers la ou les zones de désinjection de lumière (202) et sort de là du dispositif optique supplémentaire (200),
et dans lequel au moins une, de préférence exactement une, zone de découplage de lumière (202) est disposée entre deux corps conducteurs de lumière (2) voisins, de telle sorte que la lumière sortant de la zone de découplage de lumière (202) peut pénétrer dans le corps optique (1) par la surface libre (12) entre les deux corps conducteurs de lumière (2) et se propager dans celui-ci jusqu'à la surface de sortie de lumière (10) du corps optique (1).

2. Dispositif d'éclairage selon la revendication 1, dans lequel les zones de couplage de lumière (202) sont disposées en dessous d'un ou des bords supérieurs (2b') des surfaces de sortie de lumière (2b).

3. Dispositif d'éclairage selon l'une des revendications précédentes, dans lequel une direction principale de sortie de lumière (X2) de la lumière sortant d'une zone de couplage de lumière (202) est approximativement parallèle à la direction de sortie de lumière (X1) dans laquelle la lumière provenant d'un corps de guidage de lumière (2) adjacent à la zone de couplage de lumière (202).

4. Dispositif d'éclairage selon l'une des revendications précédentes, dans lequel une direction principale de sortie de lumière (X2) de la lumière sortant d'une zone de couplage de lumière (202) est orientée de telle sorte que la lumière provenant du dispositif de projection (500) est reproduite dans une zone située au-dessus d'une ligne 0°-0°, en particulier de telle sorte que la lumière de toutes les zones de sortie de lumière (202) forme une distribution lumineuse Signlight (SV).

5. Dispositif d'éclairage selon l'une des revendications précédentes, dans lequel le dispositif optique supplémentaire (200) est constitué d'un corps (200') formé d'un matériau conducteur de lumière, le corps (200') qui forme le dispositif optique supplémentaire (200) comportant de préférence au moins une zone de couplage de lumière (201) ainsi qu'au moins une zone d'alimentation (203) qui s'y raccorde, la au moins une zone d'alimentation (203) se transformant en une zone de répartition (204) par l'intermédiaire de laquelle la lumière provenant de la au moins une source de lumière supplémentaire (250) est répartie sur la ou les plusieurs zones de couplage de lumière (202).

6. Dispositif d'éclairage selon la revendication 5, dans lequel deux ou plusieurs zones de couplage de lumière (202) sont prévues, et dans lequel, de préférence, la zone de distribution (204) et les zones de couplage de lumière (202) ont une forme en peigne.

7. Dispositif d'éclairage selon la revendication 5 ou 6, dans lequel la zone d'alimentation (203) s'étend à peu près parallèlement aux corps de guidage de lumière (2) et la zone de distribution (204) s'étend transversalement aux corps de guidage de lumière (2) et/ou transversalement à la zone d'alimentation (203), en particulier sensiblement perpendiculairement à la zone d'alimentation (203), et dans lequel il est prévu, pour chaque zone de découplage de lumière (202), une section de déviation (205) qui est reliée à la zone de distribution (204), en particulier formée d'un seul tenant avec celle-ci, section de déviation (205) par laquelle la lumière est amenée à la zone de découplage de lumière (202), une section de déviation (205) présentant de préférence une première zone de déviation (205a) qui dévie la lumière injectée par la zone de distribution (204) dans la section de déviation (205) dans la direction principale de sortie de lumière (X2).

8. Dispositif d'éclairage selon l'une des revendications précédentes, dans lequel au moins une, en particulier exactement une zone de couplage de lumière (202) est disposée entre tous les corps conducteurs de lumière (2) adjacents, ou dans lequel au moins une, en particulier exactement une zone de couplage de lumière (202) est disposée entre au moins deux corps conducteurs de lumière (2) adjacents qui sont disposés de manière centrale, au moins une, en particulier exactement une zone de découplage de lumière (202) est disposée, de préférence entre plusieurs corps conducteurs de lumière (2) centraux voisins, au moins une, en particulier exactement une zone de découplage de lumière (202) est disposée.

9. Dispositif d'éclairage selon l'une des revendications précédentes, les zones de couplage de lumière (202) étant formées et/ou disposées entre des corps conducteurs de lumière (2) voisins de telle sorte qu'il en résulte une répartition de lumière de type « Signlight ».

10. Dispositif d'éclairage selon l'une des revendications précédentes, dans lequel le corps optique (1) et les corps conducteurs de lumière (2) sont formés d'un seul tenant, de préférence à partir du même matériau optiquement transparent.

11. Dispositif d'éclairage selon l'une des revendications précédentes, dans lequel les surfaces d'entrée de lumière (2a) des corps conducteurs de lumière (2) sont disposées à une distance supérieure à zéro les unes des autres, et de préférence les corps conducteurs de lumière (2) se rétrécissent de la surface de sortie de lumière (2b) vers la surface d'entrée de lumière (2a).

12. Dispositif d'éclairage selon l'une des revendications précédentes, dans lequel les rayons lumineux émis par les corps conducteurs de lumière (2) de l'unité d'éclairage (101) sont représentés par le dispositif de projection (500) sous forme de répartition lumineuse segmentée (FLV), la répartition lumineuse (FLV), qui comprend deux ou plusieurs segments lumineux (SEG) juxtaposés, se situant au moins en partie, en particulier en grande partie, au-dessus d'une ligne 0°-0°.

13. Dispositif d'éclairage selon l'une des revendications précédentes, dans lequel les surfaces libres (12), en particulier toutes les surfaces libres, sont planes et/ou une structure optique, par exemple sous forme de rainures, est prévue dans ou sur les surfaces libres (12), en particulier dans ou sur toutes les surfaces libres, afin d'obtenir une homogénéisation dans le sens horizontal de la répartition lumineuse générée, en particulier de la répartition lumineuse Signlight SV.

14. Dispositif d'éclairage selon l'une des revendications précédentes, le dispositif d'éclairage (100) comprenant une autre unité d'éclairage (102), appelée unité d'éclairage principale (102) , l'unité d'éclairage principale (102) étant conçue pour produire une répartition lumineuse principale (HLV), en particulier une répartition lumineuse de feux de croisement, de préférence une répartition lumineuse de feux de croisement avec une limite HD, ou une répartition lumineuse d'avant-champ, la répartition lumineuse principale (HLV) et la répartition lumineuse segmentée (FLV) forment ensemble une répartition lumineuse en feux de route lorsque tous les segments lumineux (SEG) de la répartition lumineuse segmentée (FLV) sont allumés, et dans lequel, par exemple, en mode d'éclairage principal, l'unité d'éclairage principale (102) pour générer la répartition lumineuse (LV) et la source lumineuse supplémentaire (250) pour générer la répartition lumineuse de signalisation (SV) sont activées et les sources lumineuses (3) de l'unité d'éclairage (101) sont désactivées, et dans lequel, dans un mode de feux de route partiels, l'unité d'éclairage principale (102) et au moins une source lumineuse (3), mais pas toutes les sources lumineuses (3) de l'unité d'éclairage (101) sont activées et la source lumineuse supplémentaire (250) est atténuée ou désactivée.

15. Projecteur de véhicule automobile comprenant au moins un dispositif d'éclairage selon l'une des revendications 1 à 14.
